# EUROPEAN PATENT SPECIFICATION

(11) **EP 1 336 365 B1**
(45) Date of publication and mention of the grant of the patent: **25.01.2006**
(21) Application number: 01274466.0
(22) Date of filing: 23.11.2001
(51) Int. Cl.: A47J 31/40

(54) **REMOVABLE DISTRIBUTOR FOR COFFEE MACHINES**
ABNEHMBARER VERTEILER FÜR KAFFEEMASCHINE
DISTRIBUTEUR EXTRACTIBLE POUR MACHINES A CAFE

(43) Date of publication of application: 20.08.2003
(73) Proprietor: AZKOYEN INDUSTRIAL, S.A., E-31350 Peralta (ES)
(72) Inventor: ARCELUS LECUMBERRI, Lorenzo, 31350 Peralta (Navarra) (ES)
(74) Representative: Carpintero Lopez, Francisco
(86) International application number: PCT/ES2001/000448
(87) International publication number: WO 2003/043471

(56) References cited:
- EP-A- 0 740 919
- US-A- 3 446 137
- US-A- 5 144 886
- US-A- 5 367 947
- US-A- 5 957 033

## Description

The present invention relates to a brewing assembly, for coffee machines of domestic or industrial use, which can be removed from the machine to facilitate the operations of cleaning the components which form said brewing assembly.

The brewing assembly object of the invention has the particularity that all its components are grouped together in a module which can be divided into two mutually independent parts or units, so that certain elements, like the pressing piston, can become independent with respect to the remaining components of the brewing assembly to facilitate the cleaning operations.

### BACKGROUND OF THE INVENTION

The machines intended for the preparation of coffee, be they of the domestic or industrial type like those employed in bars and establishments for the sale of prepared coffee to the public, have as one of their main drawbacks the fact that certain parts and elements constantly become soiled, in particular those parts which come into contact with the ground coffee or with the coffee already prepared.

The cleaning of those parts which are frequently soiled is carried out in a periodic manner, it being necessary to interrupt the operation and therefore the service of the machine during the cleaning.

To this end, some coffee machines are incorporated in a such way that they allow the removal of the pieces or elements that it is necessary to clean, the object being that said pieces or elements can be cleaned outside the machine which clearly implies performing a quicker and simpler operation.

Based on the idea of removing or dismantling pieces or elements that should be cleaned in the type of coffee machines referred to, some manufacturers have built their machines so that part of the elements are grouped in a single block, the purpose being to facilitate their removal and subsequent cleaning outside the machine.

Specifically the Spanish patent 2.006.367, refers to a distributor device which comprises a container in which are grouped together the water heater, the feed hopper, the pressing piston, the filter or lower piston and the operating elements, constituted by a vertical spindle and a series of connecting rods, cranks and levers, driven by the corresponding reduction-gear motor.

In the European Patent 0154206 the machine is also embodied so that all the parts or elements subjected to the action of the coffee in powdered form or of the coffee already prepared, are grouped into a single block which is inserted in a removable manner in the body of the machine itself, whereby that assembly or group is constituted based on a support equipped with a series of guides for its assembly in the machine, being grouped together in the module or block, at least, the scalding chamber which forms part of the holder in this type of machines, as well as the organ for closing said scalding chamber, constituted by a pressing piston, the outlet tube of the prepared coffee, as well as the ejector of the actual coffee tablet once the water has passed through it, and which ejector constitutes a lower piston, the block being completed with a scraper intended for the removal of the coffee tablet when expelled from the scalding chamber.

The remaining components of the machine such as the water reservoir tank, the heater of said water, the electric pump or the drive motor, are housed inside the machine in a permanent manner.

On the other hand, in the PCT WO93/07792, a coffee machine is proposed characterised in that the removable parts are mounted in two independent blocks, one including the scalding device with the pieces exposed to soiling because of the coffee, that is, the scalding chamber, the pressing and ejecting pistons, an operating screw, as well as a coffee feeding device and the coffee tablet ejector, whilst the second block contains the motor and the corresponding transmission means and gearing for the operation of the machine.

Thus, the machines described in said patents although they allow the removal of the modules or blocks mentioned in order to be able to perform the cleaning of their components, suffer from the drawback that the removal of the block involves the removal of all the elements which constitute it as an indivisible unit, that is when the module has been removed from the machine the different elements thereof remain in the form of a block and the cleaning has to be carried out of the block as such. It has to be borne in mind that it can be of interest that it be possible to make one whatever of the components, as may be the pressing piston, independent with respect to the block, which would allow for example the resolution in a more convenient and simpler manner of possible problems of clogging of the pressing piston.

### DESCRIPTION OF THE INVENTION

The removable brewing assembly object of the invention, has the particularity that the module in which are mounted all the components which are subjected generally to soiling from the ground coffee and/or the prepared coffee, can be subdivided into two parts or units, so that the pressing piston, with its support and the coffee outlet tube, can remain in the machine whilst the remaining elements are removed, that is, the holder, the lower piston, the coffee feed hopper, the scraper and all the corresponding operating elements.

The possibility also exists that, when it is necessary, the mentioned pressing piston, with the coffee outlet tube and the corresponding support can also be removed from the machine.

In this way, besides quick and easy cleaning of all the elements which constitute the brewing assembly, it is possible to resolve in a simple manner the possible clogging of the pressing piston which, in the current machines proves very complicated in that the piston with the remaining elements of the brewing assembly constitutes a module or unit which can be removed but which is indivisible and therefore the dismantling of its components is not foreseen.

In short, one of the units incorporates the pressing piston and the coffee outlet tube which are mounted on a case and this in turn on a support which is fastened to the machine by screws or similar, whilst the remaining components, that is, the holder, the lower piston, the feed hopper and the scraper are grouped together forming a second block or unit which has means for rapid-action coupling and decoupling, with respect to the unit which incorporates the pressing piston and with respect to the machine itself.

The rapid-action coupling and decoupling means are constituted by some externally operated controls, foreseen on the body of the unit which incorporates the holder and the remaining elements mentioned, which controls act on individual levers which can be lodged in or dislodged from respective housings foreseen in the support of the pressing piston and in the actual body of the machine so that, by acting on the coupling and decoupling means, it is possible to free from each other the two units which constitute the module and dislodge the unit which incorporates the holder with respect to the machine, it being thereby possible to proceed to its removal with respect to the machine whilst the unit which incorporates the pressing piston will remain fastened to the machine, by the screws of the support.

If it is desired to remove the pressing piston, when the unit which incorporates the holder has been withdrawn, it is sufficient to release the screws which fasten the support to the machine, so that the support mentioned, and therefore the case, the pressing piston and the coffee outlet tube, become free with respect to the machine. This operation facilitates, for example, the operations of unclogging the pressing piston or even the cleaning thereof.

Also, and as another characteristic of the invention, it has been foreseen that said pressing piston can be dismantled with respect to the case and corresponding support, permitting the carrying out, in an even simpler way, of any operation of unclogging the piston. It also facilitates the operations of replacement, repair, cleaning of the piston and regulation of the dosage.

It is also an innovative characteristic that in the brewing assembly or module object of the invention, the means used in producing the movements in the holder to perform the loading with ground coffee of the scalding chamber, or to establish the confrontation of said chamber loaded with ground coffee with respect to the pressing piston, to carry out the preparation of the coffee, are structurally and functionally simple.

The downward/upward and swivelling movements of the holder to carry out those functions, are based on a connecting rod in hinged connection with the actual holder, said connecting rod being worked by means of a crank arm which receives the force of an external organ, it being possible that the latter be a reduction-gear motor or, when the module is removed, a manually operated lever.

So that in the downward movements the holder is displaced without rotating, it has been foreseen that said holder has a pair of pins which are guided in respective channels established for this purpose in the body of the brewing assembly or module itself, one of which channels is completely straight whilst the other has a straight stretch followed by another which is arched, so that in the rotation of the crank arm, the displacement and swivelling take place of the connecting rod hinged to the holder, and in turn of the crank arm, which signifies the displacement of said holder but not its swivelling, whilst the pins of said holder are displaced in a guided manner in the straight stretches of the channels. Now, when one of those pins reaches the curved stretch of one of the channels, the swivelling will take place of the holder, all this with the purpose of obtaining the confrontation of the scalding chamber of said holder with the ground coffee feed hopper, for the reception of the corresponding dose or to achieve the position of confrontation of the scalding chamber with the pressing piston for the preparation of the coffee, in the opposite operating movement.

The lower piston which the holder has, for the expulsion of the coffee tablet when the descent has taken place and the swivelling of the holder itself has commenced, is prolonged in a spindle which is finished at the bottom in some rollers on which can impinge in the swivelling a first cam joined firmly to the crank arm which will impede that during the descent of the holder the aforementioned lower piston can descend, which signifies that the latter appears on the exterior of the scalding chamber and produces, by means of a scraper established for this purpose in the appropriate area, the pushing and removal of the coffee tablet which is expelled by the aforementioned lower piston or ejector.

A second cam has also been foreseen which is engraved on the interior faces of the connecting rod and which acts during the swivelling movement of the holder toward the position of confrontation of the corresponding scalding chamber with the ground coffee hopper, to make the lower piston or ejector descend, as a consequence of this second cam impinging on the aforementioned roller making the piston ejector descend.

An important characteristic relates to the fact that the aforementioned operating means and the movements thereof are designed so that in the pressing position, in which large forces are produced on the different elements, the axle of rotation of the crank arm and the axle of the connecting rod are aligned with the transversal roller of the spindle of the lower piston, in such a way that both the crank arm and the connecting rod work in compression with the holder and the pressing piston and, therefore, they are in a stationary condition which allows the compressive forces to be supported perfectly which occur in this operating phase.

It has also been foreseen that the brewing assembly has means of rapid-action coupling with respect to the driving reduction-gear motor, means which comprise a clutch plate, mounted on the output shaft of the reduction-gear motor of the machine and a cam with a pawl which works the operating shaft of the crank arm of the brewing assembly, in such a way that when coupling the module to the machine, the cam is facing the clutch plate and is pulled by the engagement of the pawl of the cam in a radial groove of the clutch plate, producing in this way the movement of the crank arm of the brewing assembly.

The cam of the brewing assembly also has an irregular external profile which, in its rotation driven by the clutch plate, passes in front of a microsensor in such a way that the external profile of the cam determines the different phases or sequences of rotation of the crank arm in accordance with the different operating phases.

Another characteristic of innovation of the brewing assembly or module object of the invention consists in the incorporation of a system of rapid-action coupling of the water feed socket, said coupling being materialized by a male coupler, foreseen in the brewing module, and by a complementary female coupler, foreseen in the machine, the female coupler being mounted on a support capable of a slight displacement, with the object of being able to take up small mismatches or misalignments between the two couplers, facilitating in this way the plug-in connection of the brewing module.

It has also been foreseen that the pressing piston is mounted on the case of the support, with the intermediation of means for regulating its position, in such a way that the piston is more or less distant from the holder in order to obtain a greater or lesser volume in the scalding chamber and consequently to vary the quantity of coffee produced, these regulating means being materialized in a series of washers, of diverse thickness, which can be combined to achieve the desired volume in the scalding chamber.

Likewise it has been foreseen that the ground coffee teed hopper can be dismantled in an independent manner with respect to the brewing assembly or module itself, allowing better cleaning thereof, based on the hopper having some external legs which can be housed and retained in a groove foreseen for this purpose in the body of the brewing module.

### DESCRIPTION OF THE DRAWINGS

To complete the description that is being made and with the object of assisting in a better understanding of the characteristics of the invention, in accordance with a preferred example of practical embodiment thereof, a set of drawings are appended as an integral part of said description, wherein, by way of illustration and not restrictively, the following has been represented:
Figure 1 shows a perspective view from the front part, of the complete brewing module that is, including the unit which incorporates the pressing piston and the coffee outlet socket.
Figure 2 shows a perspective view from the rear part of the complete brewing module that is, including the unit that incorporates the pressing piston and the coffee outlet socket and showing especially the support for fastening, by screws, to the machine of the unit which incorporates the pressing piston.
Figure 3 shows a perspective, of the unit which can be made independent comprising the pressing piston, the coffee outlet socket and the corresponding supports.
Figure 4 shows another perspective of the unit which incorporates the pressing piston.
Figure 5 shows a view in transversal section on a vertical plane of the module which constitutes the removable brewing assembly for coffee machines embodied in accordance with the object of the invention.
Figure 6 shows a view in side elevation of the module represented in the previous figure with one of the sides of its body removed to allow the different fundamental elements integrated in the brewing assembly or module to be seen, the latter being in the coffee preparation position.
Figure 7 shows a view like that of the previous figure, in the ensuing operating phase of the brewing assembly or module, the phase corresponding to that of expulsion of the coffee tablet.
Figure 8 shows the same view in side elevation as that of the two previous figures, in an ensuing operating phase in which precisely the sweeping away or removal of the coffee tablet is taking place.
Figure 9 shows the same view in side elevation of the three previous figures, in an ensuing operating phase in which the coffee tablet has fallen through the lateral ramp of the scalding chamber and the lower piston is descending whilst the scalding chamber is almost positioned under the feed hopper.
Figure 10 shows a view like that of the previous figure, but in the ensuing operating phase, with the lower piston or ejector positioned on the bottom of the scalding chamber, the latter having received the dose of ground coffee coming from the feed hopper.

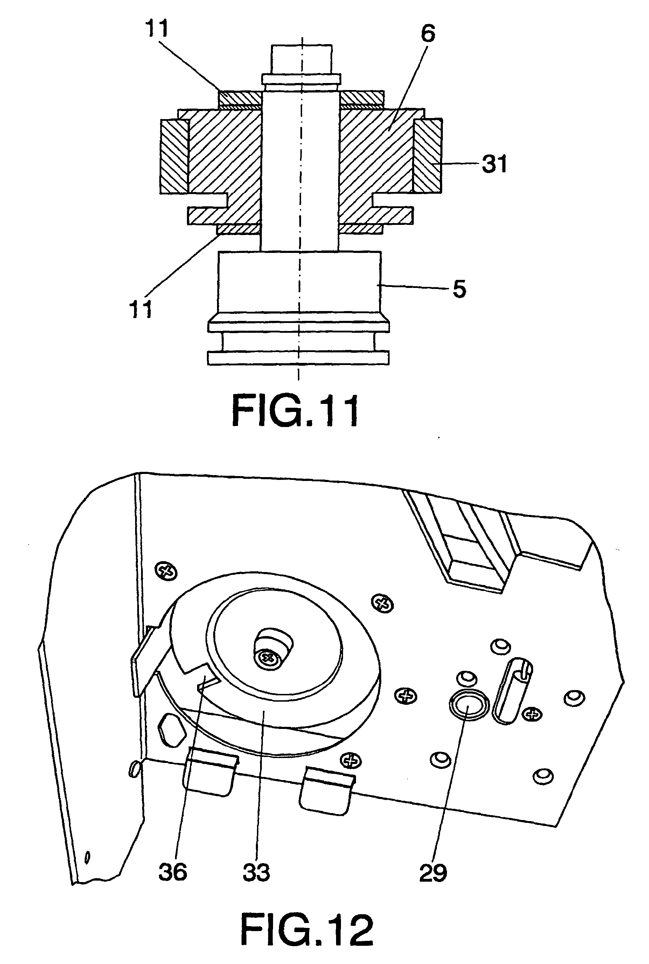

Figure 11 shows a view of the assembly of the pressing piston on the supporting case, including a series of washers to regulate the quantity of coffee produced.
Figure 12 shows a detail of the coffee machine, in which the means of mechanical coupling and of the water inlet socket are observed, foreseen in the body of the coffee machine for the brewing assembly.
Figure 13 shows a detail in cross-section of the means of rapid-action connection between the brewing module or assembly to the machine, for the feed water intake.

### PREFERRED EMBODIMENT OF THE INVENTION

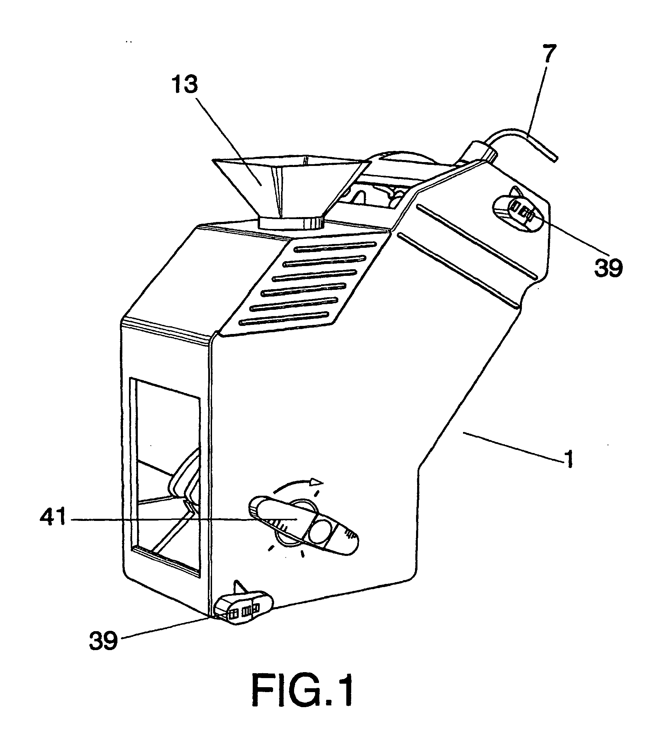

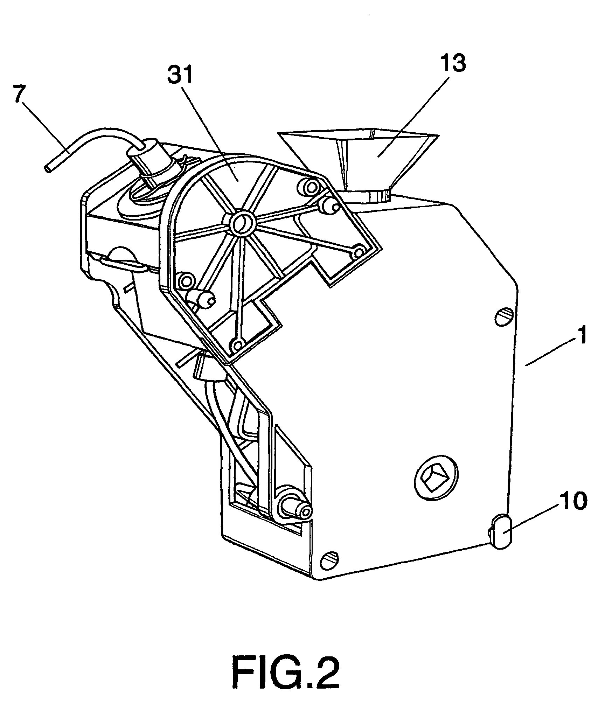

In the light the figures pointed out, it can be observed how all the elements which constitute the brewing assembly are contained in a module (1), such as is observed in figures 1 and 2, this module being in turn constituted by two parts or units which can be made independent.

One of the constituent units of the module (1) includes the pressing piston (5) and the outlet tube (7), both elements being mounted on a case (6) which in turn is mounted on a support (31), through which the group of these elements is fastened, by screws, to the coffee machine.

The other unit contains most of the elements of the brewing assembly, namely a holder (2) in which the corresponding scalding chamber (3) is formed, a lower pressing piston (14), a coffee feed hopper (13), a scraper element (26), as well as the different operating elements, like the crank arm (4), the connecting rod (16) or the cams (21) and (22), this unit having means of rapid-action coupling and decoupling (39) with respect to the unit which incorporates the holder (2) as well as with respect to the coffee machine itself.

Thus, it is possible to extract the unit which incorporates the holder (2), with the remaining elements mentioned, to perform cleaning thereof outside the machine, whilst the unit which incorporates the pressing piston (5) remains fastened to the machine.

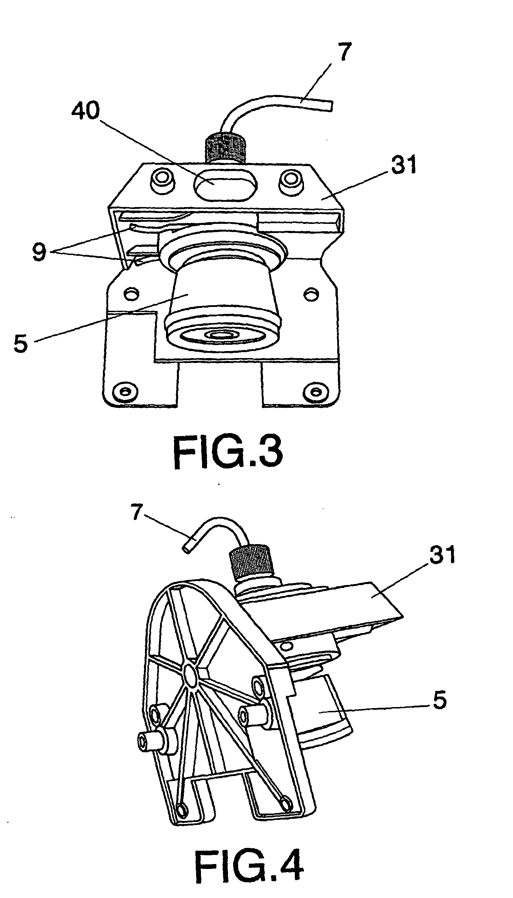

As can be observed in figures 3 and 4, the support (31) is constituted by two parts, on one hand a horizontal projection, by way of a cover which has a central hole in which is mounted the case (6) which supports the pressing piston (5) and the coffee outlet tube (7) and on the other hand, by a lateral rim fastened to the machine by means of the corresponding screws, in such a way that it can be made independent of this when it is necessary for the cleaning, replacement or unclogging of the pressing piston (5) by simply unscrewing the support (31) with respect to the machine.

The unit that incorporates the holder (2) and the remaining elements, is joined to the machine and to the support (31) of the pressing piston by means of a rapid-action coupling/decoupling system, which is constituted based on some manually and externally operated butterfly screws (39), foreseen in the external body of the actual unit, the operation of which produces the engagement or securing of some pins (10) in individual lodgings (40) foreseen in the horizontal projection of the support (31) and in the actual body of the machine, in such a way that the unit can be removed which incorporates the holder and the remaining elements, the pressing piston (5) and the coffee outlet tube (7) being fastened to the machine through the support (31) which, as has been said, is screwed to the machine itself.

On the other hand, the possibility exists that, when the unit which incorporates the holder (2) has been removed, it is also possible to proceed to the removal of the pressing piston (5), with respect to the case (6) to which it is coupled, achieving this by simply acting on the wishbone spring (9) which produces the release of the aforementioned piston (5).

The possibility has also been foreseen to vary the assembly position of the piston (5) with respect to the case (6) for the purpose of regulating the position between this piston (5), in such a way that depending on the position which the pressing piston (5) occupies, the volume is varied of the scalding chamber (3) and thereby the dose or quantity of coffee produced. The variation in the position of the piston (5) is obtained by means of the use of a series of washers (11) which can be arranged both on the upper and lower face of the case (6) and, in variable thickness and number in order to be able thereby to obtain multiple regulations of the doses of coffee.

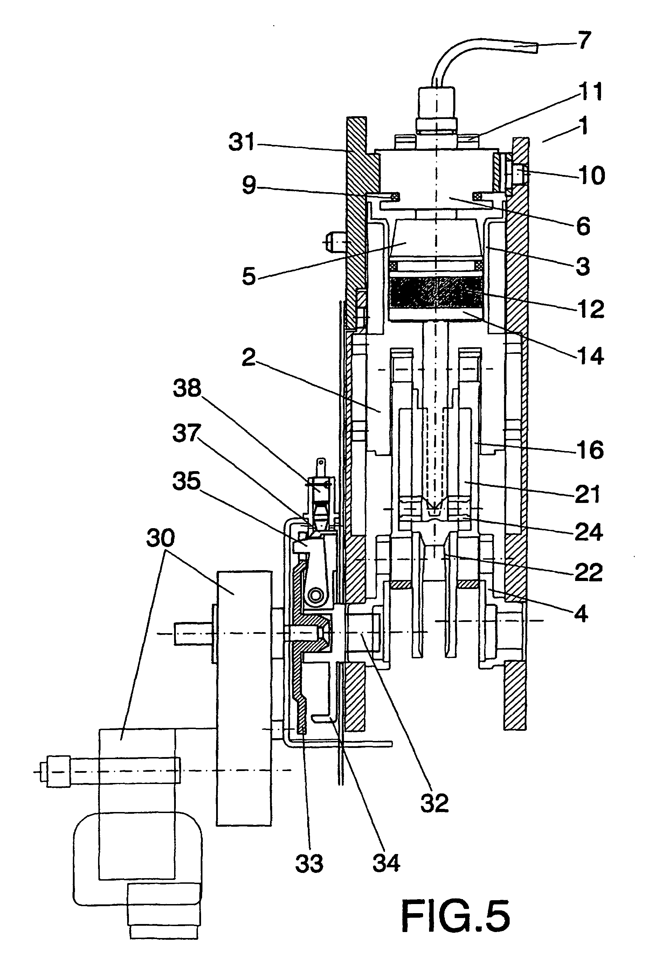

Furthermore, as can be observed in figure 5, the driving reduction-gear motor (30) acts, through the shaft (32), on the crank arm (4) on which is mounted, in hinged manner through the pin (23), a connecting rod (16) which is connected with the holder (2), through a hinge pin (17), with the particularity that firmly joined to the holder (2) itself are arranged perpendicularly thereto two pins (18) which are guided in respective channels (19) and (20) established for this purpose in the body corresponding to the brewing assembly or module itself, with the particularity that the channel (19) is straight over all its length, whilst the channel (20) has a straight stretch and an arched stretch (20').

On the crank arm (4), and in correspondence with a point opposite to that of the shaft (32) through which it receives the driving action of the reduction-gear motor (30), a pair of cams (21) and (22) are mounted, the cam (22) being firmly joined to the crank arm (4), whilst the cam (21) is cut inwardly on the connecting rod (16).

Also, a transversal roller (24) has been foreseen on the lower end of the lower piston (14), which roller slides inside a longitudinal channel (25) of the holder (2), in such a way that the lower piston ascends or descends along the mentioned channel (25) of the holder, to occupy different positions in the scalding chamber (3), in accordance with the thrust which is produced on the roller (24) by the cams (21) and (22), as will be described in more detail below.

This unit of the brewing assembly is also completed with a scraper element (26) defining a means of removing the coffee tablet (12) when it has been expelled by the lower piston (14) as will be explained subsequently.

In accordance with these characteristics, the operation of the machine, or rather of the brewing assembly or module with the components referred to, is as follows.

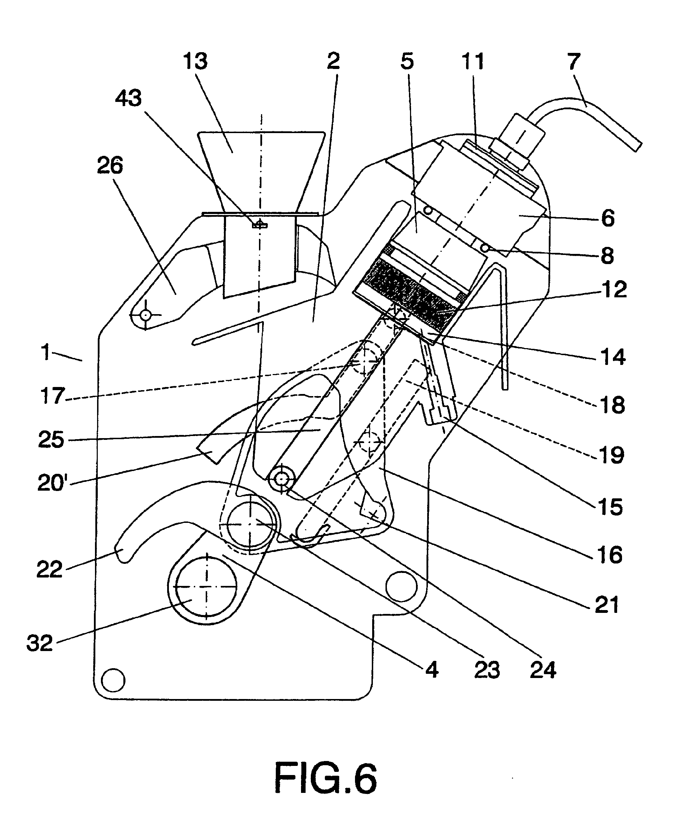

In figure 6 the brewing position is shown, that is, that of coffee preparation, wherein the scalding chamber (3) is facing the pressing piston (5), and in the position precisely in which said piston is carrying out the pressing of the tablet of ground coffee (12) inside said scalding chamber (3), with the lower piston (14) in the lowermost position with respect to the holder (2). At the same time as the pressing of the coffee tablet (12) is taking place, the water is entering through the pipe (15), producing the brewing of coffee which comes out through the outlet tube (7). In said position the holder (2) is in the uppermost position, in which neither the cam (21) nor the cam (22) act. In this position, the shafts (32) and (23) are aligned with the transversal roller (24), in such a way that both the crank arm (4) and the connecting rod (16) and the holder (2) are working in compression with the pressing piston (5) and therefore, in a stationary condition which allows the compressive forces to be supported perfectly which occur in this operating phase.

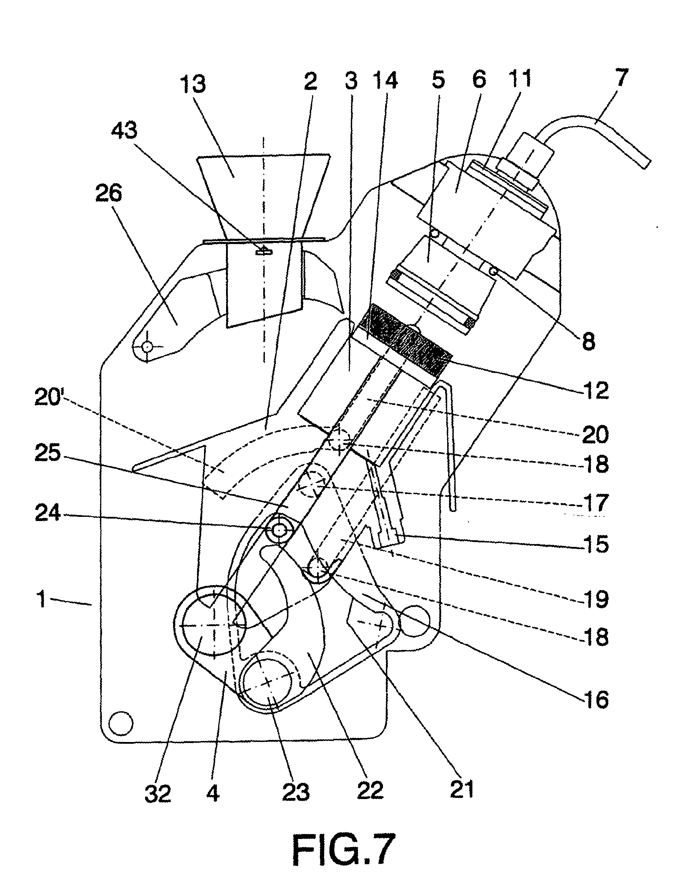

Passing to the position corresponding to figure 7, which corresponds to that of expulsion of the coffee tablet (12), it is seen therein that the holder (2) has been displaced downwards by the operation of the reduction-gear motor (30), which signifies the rotation of the crank arm (4) and thereby the descent of the aforementioned holder (2), so that for the descent of this to take place, that is, the straight displacement thereof but without swivelling, the pins (18) are guided in the channels (19) and (20) already mentioned, so that in that downward movement of the holder (2) the logical separation of the pressing piston (5) takes place, both of the actual holder (2) and of the tablet (12), so that it is assured that the tablet (12) does not remain stuck to the pressing piston (5). Next, the cam (22) impinges on the roller (24) preventing the lower piston (14) from descending, which forces the aforementioned lower piston (14) to rise toward the mouth of the scalding chamber (3), the expulsion taking place of the coffee tablet (12) as is represented in figure 7.

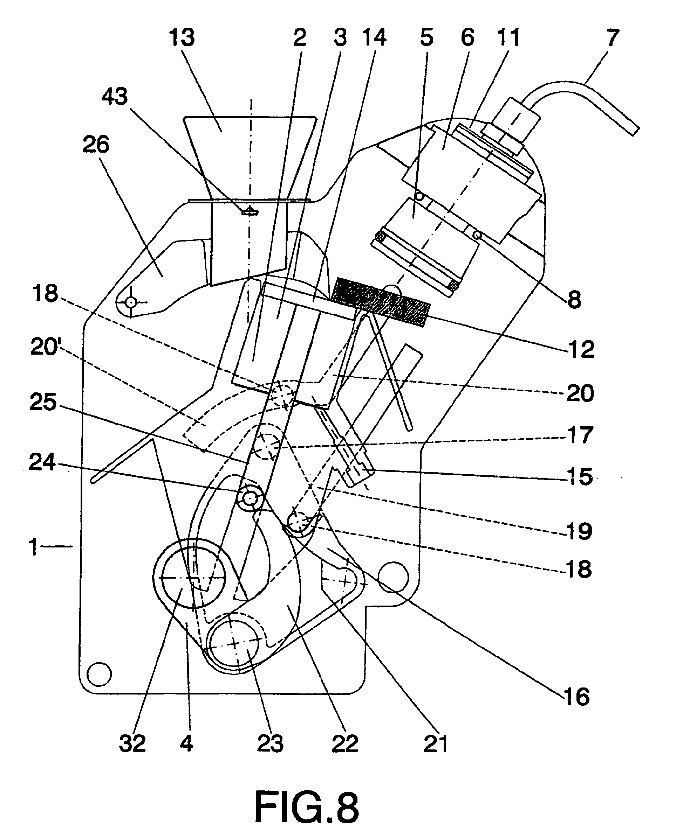

The following operating phase, corresponding to figure 8, corresponds to that of sweeping, in which the movement of the reduction-gear motor (30) and corresponding swivelling of the crank arm (4) signifies the pulling of the connecting rod (16), causing a rotation or swivelling of the holder (2), as a consequence of which the pin (18) of the channel (20) enters the arched stretch (20') of said channel, which will produce the swivelling of said holder (2) around the point which is constituted by the other pin (18) which will have remained positioned on the bottom of the straight channel (19). Simultaneously, the holder (2) passes below the element which constitutes the scraper (26), producing the pushing and drawing of the coffee tablet (12) toward the exterior as is represented clearly in said figure 8.

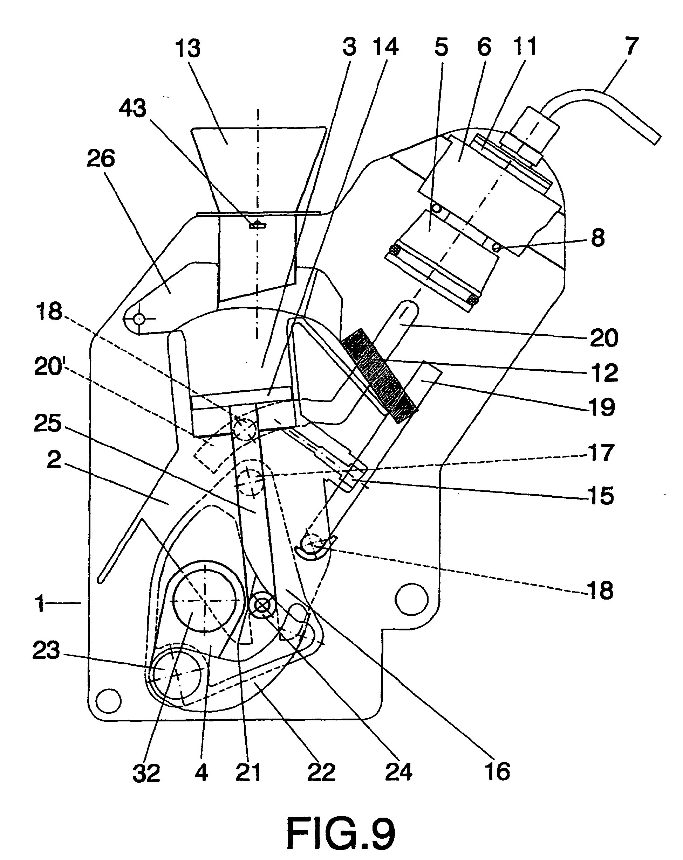

The following operating phase shown in figure 9, corresponds to the descent of the lower piston (14), inside the scalding chamber (3), whilst the holder (2), drawn by the connecting rod (16), swivels to be positioned under the hopper (13). The lower piston (14) descends as a consequence of the cam (21) pushing the roller (24) downwards, making the lower piston (14) descend inside the scalding chamber (3), as is represented in the mentioned figure 9.

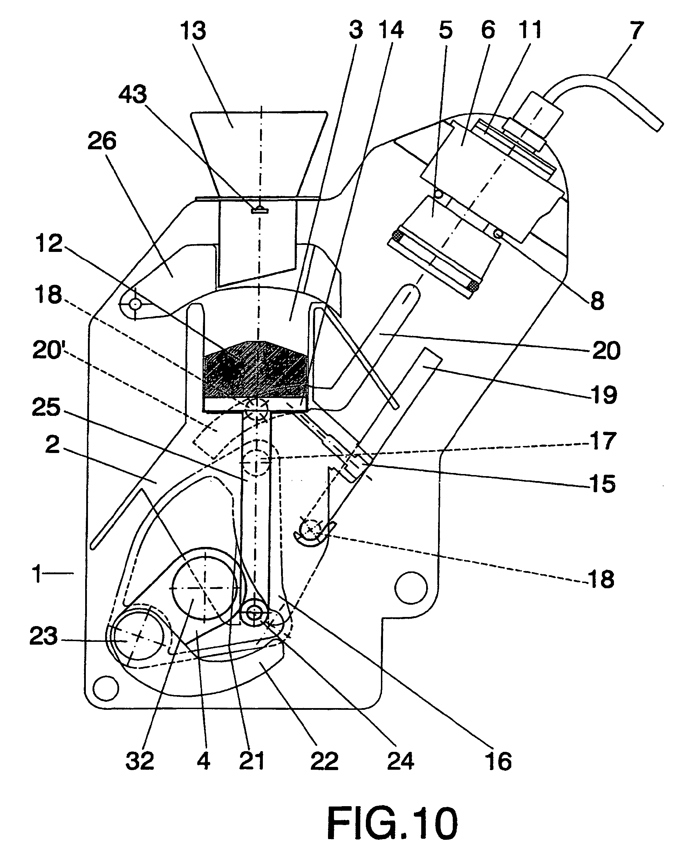

In figure 10 the loading position is shown, in which the holder is already positioned under the hopper (13) and the lower piston (14) has descended to the bottom of the scalding chamber (3), the discharge of the dose of coffee (12) from the hopper (13) taking place into the scalding chamber (3).

Subsequently, and starting from that position represented in figure 10, the holder (2) is pulled in the opposite direction until being with the scalding chamber (3) facing the pressing piston (5) to produce thereafter the elevation of the actual holder (2) so that said piston (5) is introduced inside the chamber (3) and produces the pressing of the dose or tablet of ground coffee (12), which will originate, by the intake of water through the pipe (15), the corresponding brewing of the prepared coffee, which will be withdrawn through the outlet tube (7).

It has also been foreseen that the brewing assembly has means of rapid-action coupling with respect to the driving reduction-gear motor (30), which means comprise a clutch plate (33), mounted on the output shaft of the reduction-gear motor (30) of the machine, which is coupled with a pawl cam (34) which works the shaft (32) of the crank arm (4) of the brewing assembly.

In short, the unit which incorporates the holder (2) has a cam (34) which gains access to the exterior through the body thereof and which has a pawl (35) restrained by a spring, it having been foreseen that when coupling this unit to the machine, the cam (34) is situated facing the clutch plate (33) but initially remains immobile while the clutch plate (33) rotates, up to a point at which a radial groove (36) foreseen on the periphery of the disk (33) reaches the position of the pawl (35) of the cam (34) which, through the action of the spring, is engaged in the aforementioned groove (36), the meshing taking place between the disk (33) and the cam (34) which begins to rotate drawn by the clutch plate (33), transmitting this movement in turn to the shaft (32) which works the crank arm (4) of the brewing assembly.

The cam (34) also has an external and irregular profile (37) which, in its rotation driven by the clutch plate (33), passes in front of a microsensor (38) in such a way that the external profile (37) of the cam (34) defines the different phases or sequences of rotation of the crank arm (4) in accordance with the different operating phases.

Also it has been foreseen that the ground coffee feed hopper (13) can be dismantled in an independent manner with respect to the actual module (1), allowing better cleaning thereof. For this, the hopper (13) has a pair of legs (43) which are intended to lodge in some grooves foreseen for this purpose in the body of the unit which incorporates the holder (2), each of these grooves having rebates which allow the introduction or removal of the aforementioned hopper (13), the fastening thereof being simply obtained by rotating the hopper in such a way that the aforementioned legs (43) are introduced in the aforementioned groove, impeding in this way the removal of the hopper. Obviously, to extract the hopper (13) it is sufficient to rotate the hopper (13) again until the legs (43) coincide with the position of the rebates foreseen in the body.

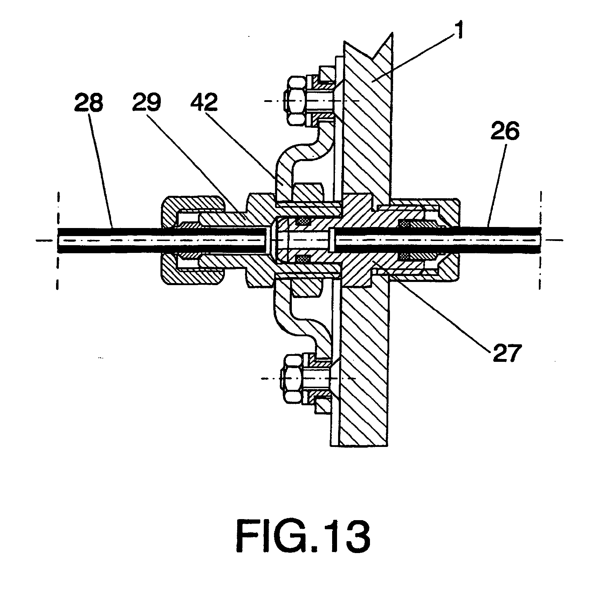

The brewing assembly object of the machine also has means of rapid-action connection to the water feed socket, as is represented in figure 13, wherein said coupling or connection is carried out through valves which allow said rapid connection or coupling with the assembly which constitutes the brewing assembly or module. More specifically, the water socket (26) of the brewing assembly is finished in a male coupler (27) which is plugged into the water socket (28) of the machine itself, through a female coupler (29), complementary to the male coupler (27).

The aforementioned female coupler (29) is mounted on a bracket (42) which has a certain displacement capability in the direction perpendicular to that of connection, in such a way that small mismatches or misalignments between the two couplers (27) and (29) can be absorbed, facilitating in this way the plug-in connection of the brewing module. In said figure 13 are shown, besides the main components referred to, the sealing joints, the fastening screws, for example, of the bracket (42), the tightening nuts and other necessary elements in the assembly of the valve arrangement referred to.

## Claims

1. Removable brewing assembly for coffee machines, which is applicable in machines for the preparation of coffee in which the brewing assembly is removable with respect to the body of the machine, and includes a holder (2) in which the corresponding scalding chamber (3) of the coffee is established, the coffee proceeding from a feed hopper (13), as well as an upper piston (5) for pressing the coffee inside said scalding chamber (3), against a lower piston (14) established in the bottom of such chamber (3), that lower piston (14) also acting as an element for expulsion of the resulting coffee tablet as a consequence of the scalding, the brewing assembly also including a scraper (26) for withdrawal of the coffee tablet after this having been expelled from the scalding chamber (3), also including a water inlets (16) to the chamber (3), coming from a socket of the machine, and an outlet (7) of the prepared coffee, **characterised in that** all the components of the brewing assembly are integrated in a module (1), which module is divisible into two parts or units, one of them constituted by the pressing piston (5), the outlet tube (7) and the support (31), which is joined to the actual body of the machine, whilst the other unit contains the holder (2), the lower piston (14), the coffee feed hopper (13), the scraper (26) and the corresponding kinematics, this other unit being able to be fastened to the support (31) and to the actual body of the machine by means of a rapid-action coupling and decoupling system, in such a manner that the unit can be removed to perform the cleaning of the brewing assembly, the unit constituted by the pressing piston (5), the outlet tube (7) and the support (31) being suitable to be extracted subsequently, the module (1) incorporating means of rapid-action coupling with respect to the driving reduction-gear motor assembly (30), as well as means of rapid-action coupling to the water feed socket (28) of the machine.

2. Removable brewing assembly for coffee machines, according to claim 1, **characterised in that** the rapid-action coupling and decoupling means of the module (1) are connected with some external controls (39) the operation of which produces the rotation of individual pins (10), one of them being located in the upper part of the module (1) to allow the engagement or disengagement between the two parts or units constituting the module whilst at least one other control (39) is located in the lower part of the module to allow the engagement or disengagement between the module (1) and the machine itself.

3. Removable brewing assembly for coffee machines, according to claim 1, **characterised in that** the support (31) comprises a rim, through which it is fastened to the machine, and a horizontal projection, by way of a cover, equipped with a central hole through which the case (6) is mounted which supports the pressing piston (5), the aforementioned horizontal projection having, on its side edge, a hole (40) for the fastening of one of the pins (10) of the brewing module (1).

4. Removable brewing assembly for coffee machines, according to claims 1 and 3, **characterised in that** the pressing piston (5) is mounted on the case (6) through means which allow the piston to be made independent with respect to the case (6), these means being preferably incorporated by a wishbone spring or fastener (9), to allow any type of clogging, replacement, repair or cleaning of the piston (5) to be resolved in a quick and simple manner.

5. Removable brewing assembly for coffee machines, according to claims 1 and 3, **characterised in that** the case (6) of the presser piston (5) also incorporates the corresponding outlet tube (7) of the prepared coffee, having means which facilitate the dismantling of said outlet tube (7) with respect to the case (6).

6. Removable brewing assembly for coffee machines, according to claims 1 and 3, **characterised in that** the presser piston (5) is mounted on the case (6), with the intermediation of means which allow its position to be regulated with respect to the holder (2) achieving thereby a greater or lesser volume in the scalding chamber (3) and consequently vary the quantity of coffee produced, these means being constituted preferably by a series of disks or washers (11) which can be arranged both on the upper and lower face of the case and in variable thickness and number in order to be able so to obtain multiple regulations of the doses of coffee.

7. Removable brewing assembly for coffee machines, according to claim 1, **characterised in that** the holder (2) is linked in a hinged manner to a connecting rod (16) through which is transmitted the movement both of displacement and of swivelling of said holder (2), to locate it facing the coffee feed hopper (13) for the loading of the scalding chamber (3), or facing the presser piston (5) for the pressing of the coffee inside such scalding chamber (3), respectively.

8. Removable brewing assembly for coffee machines, according to claims 1 and 7, **characterised in that** the holder (2) has a pair of pins (18) which are guided in respective channels (19) and (20) established in the body of the brewing assembly or module (1) itself, the channel (19) being straight over all its length, whilst the channel (20) has a straight stretch and a curved stretch (20'), to allow the initial displacement downward of the holder (2) and the swivelling thereof.

9. Removable brewing assembly for coffee machines, according to claims 1, 7 and 8, **characterised in that** the operation of the holder (2) in its movements of swivelling upward/downward displacement, is carried out through a crank arm (4) operable by means of a reduction-gear motor (30) or, when the module is removed from the machine, by means of a manually operated lever (41), being mounted on said crank arm (4) a pair of cams (21) and (22) able to impinge on a roller (25), foreseen on the end of the lower piston (14), to produce, in the first case, the descent of the lower piston (14) inside the scalding chamber (3) during the displacement of the holder (2) toward the loading position of the scalding chamber (3), and to achieve that in the downward displacement of the holder (2), the cam (22) impinges on the roller (25) and impedes the descent of the lower piston (14) to produce the expulsion of the coffee tablet (12).

10. Removable brewing assembly for coffee machines, according to claims 1, 7, 8 and 9, **characterised in that** the means of operation and the movements thereof are designed so that in the pressing position, in which large forces occur on the different elements, the turning shaft (32) of the crank arm (4) and the axle (23) of the connecting rod (16) are aligned with the transversal roller (24) of the spindle (25) of the lower piston (14), in such a way that both the crank arm (4) and the connecting rod (16) and the lower piston (14), work in compression with the pressing piston (5) in the moment of pressing and, therefore, they are in a stationary condition which allows the compressive forces to be supported perfectly which occur in this operating phase.

11. Removable brewing assembly for coffee machines, according to claim 1, **characterised in that** the means of rapid-action coupling with respect to the driving reduction-gear motor assembly (30) consist of a clutch plate (33), mounted on the output shaft of the reduction-gear motor (30) of the machine, which is coupled with a cam (34) which works the shaft (32) of the crank arm (4) of the brewing assembly, it having been foreseen that the cam (34), emerges to the exterior of the module (1) and has a pawl (35) restrained by a spring, in such a way that when coupling the brewing assembly (1) to the machine, the cam (34) is facing the clutch plate (33), the former remaining immobilised, while the clutch plate (33) rotates, to a point in which a radial groove (36) foreseen on the periphery of the disk (33) reaches the position of the pawl (35) of the cam (34) which, by the action of the spring, is located in the aforementioned groove (36), producing the meshing between the disk (33) and the cam (34) which begins to rotate drawn by the clutch plate (33), this movement in turn being transmitted to the shaft (32) which operates the crank arm (4) of the brewing assembly.

12. Removable brewing assembly for coffee machines, according to claims 1 and 11, **characterised in that** the cam (34) of the brewing assembly (1) also has an irregular external profile (37) which, in its rotation driven by the clutch plate (33), passes in front of a microsensor (38) in such a way that the external profile (37) of the cam (34) defines the different phases or sequences of rotation of the crank arm (4) in accordance with the different operating phases of the machine.

13. Removable brewing assembly for coffee machines, according to claim 1, **characterised in that** the means of rapid-action coupling to the water feed socket (28), are materialized in a male coupler (27) which is complementary to a female coupler (29) foreseen in the machine, the female coupler (29) being mounted on a support (42) capable of a slight transversal displacement, with the object of being able to absorb small mismatches or misalignments between the two couplers (27) and (29), facilitating in this way the plug-in connection of the brewing module.

14. Removable brewing assembly for coffee machines, according to claim 1, **characterised in that** the ground coffee feed hopper (13) can be dismantled with respect to the actual brewing assembly or module (1), it having been foreseen for this that in the lower coupling neck thereof it has a pair of legs (43) which are intended to lodge in some grooves foreseen for this purpose in the body of the module (1), each of these grooves having rebates which allow the insertion or removal of the mentioned hopper (13), the fastening thereof being simply obtained by rotating the hopper in such a way that the aforementioned legs (43) are introduced in the aforementioned groove, impeding in this way the removal of the hopper, whilst to extract the hopper (13) with respect to the brewing assembly, it is sufficient to rotate the hopper (13) until the legs (43) coincide with the position of the rebates foreseen in the body.

## Patentansprüche

1. Abnehmbare Brühbaugruppe für Kaffeemaschinen, verwendbar in Maschinen für die Zubereitung von Kaffee, in denen die Brühbaugruppe in Bezug auf den Grundkörper der Maschine abnehmbar ist, und umfassend eine Halterung (2), in die die zugehörige Brühkammer (3) für den aus einem Fülltrichter (13) zugeführten Kaffee eingesetzt ist, sowie einen oberen Kolben (5) zum Drücken des Kaffees in der Brühkammer (3) gegen einen am Boden dieser Kammer (3) befindlichen unteren Kolben (14), wobei der untere Kolben (14) auch als ein Element zum Ausstoßen der in Folge des Brühvorgangs entstehenden Kaffeemasse wirkt, wobei die abnehmbare Brühbaugruppe weiterhin einen Schaber (26) zum Entfernen der Kaffeemasse, nachdem diese aus der Brühkammer (3) ausgestoßen worden ist, sowie einen aus einem Rohrstück der Maschine kommenden und in die Kammer (3) führenden Wassereinlaß (16) und einen Auslaß (7) für den zubereiteten Kaffee umfaßt, **dadurch gekennzeichnet, daß** alle Komponenten der Brühbaugruppe in einem Modul (1) integriert sind, welches Modul in zwei Teile oder Einheiten zerlegbar ist, wobei eine davon durch den drückenden Kolben (5), das Auslaßrohr (7) und den mit dem eigentlichen Grundkörper der Maschine verbundenen Träger (31) gebildet ist, während die andere Einheit die Halterung (2), den unteren Kolben (14), den Kaffeefülltrichter (13), den Schaber (26) und die entsprechende Kinematik enthält, wobei diese andere Einheit an dem Träger (31) und an dem eigentlichen Grundkörper der Maschine mittels eines Schnellkupplungs- und -entkupplungssystems in solcher weise befestigt werden kann, daß die Einheit zum Reinigen der Brühbaugruppe abgenommen und die aus dem drückenden Kolben (5), dem Auslaßrohr (7) und dem Träger (31) gebildete Einheit danach herausgezogen werden kann, und wobei in dem Modul (1) Schnellkupplungsmittel in Bezug auf die antreibende Reduktionsgetriebe-Motor-Baugruppe (30) sowie Schnellkupplungsmittel zu dem Wasserzulaufrohr (28) der Maschine integriert sind.

2. Abnehmbare Brühbaugruppe für Kaffeemaschinen nach Anspruch 1, **dadurch gekennzeichnet, daß** die Schnellkupplungs- und -entkupplungsmittel des Moduls (1) mit mehreren außen angebrachten Bedienelementen (39) verbunden sind, deren Betätigung die Drehung einzelner Stifte (10) bewirkt, wobei eines davon so in dem oberen Teil des Moduls (1) angeordnet ist, daß die zwei das Modul bildenden Teile oder Einheiten in und außer Eingriff gebracht werden können, während wenigstens ein anderes Bedienelement (39) in dem unteren Teil des Moduls so angeordnet ist, daß das Modul (1) und die Maschine selbst in und außer Eingriff gebracht werden können.

3. Abnehmbare Brühbaugruppe für Kaffeemaschinen nach Anspruch 1, **dadurch gekennzeichnet, daß** der Träger (31) einen Rand, über den er an der Maschine befestigt ist, und einen horizontalen Vorsprung umfaßt, der über eine Abdeckung in der Mitte mit einer Öffnung versehen ist, durch die der den drückenden Kolben (5) tragende Einsatz (6) befestigt ist, wobei der erwähnte horizontale Vorsprung an seiner Seitenkante mit einer Öffnung (40) für die Befestigung eines der Stifte (10) des Brühmoduls (1) versehen ist.

4. Abnehmbare Brühbaugruppe für Kaffeemaschinen nach den Ansprüchen 1 und 3, **dadurch gekennzeichnet, daß** der drückende Kolben (5) an dem Einsatz (6) mit Mitteln befestigt ist, die eine in Bezug auf den Einsatz (6) unabhängige Herstellung des Kolbens erlauben, wobei diese Mittel vorzugsweise eine Querarmfeder oder -verbindung (9) enthalten, damit Verstopfungen des Kolbens (5) schnell und einfach beseitigt werden können und der Kolben (5) ebenso schnell und einfach gewechselt, repariert oder gereinigt werden kann.

5. Abnehmbare Brühbaugruppe für Kaffeemaschinen nach den Ansprüchen 1 und 3, **dadurch gekennzeichnet, daß** der Einsatz (6) des drückenden Kolbens (5) außerdem das entsprechende Auslaßrohr (7) für den zubereiteten Kaffee enthält und Mittel umfaßt, die einen Ausbau des Auslaßrohrs (7) in Bezug auf den Einsatz (6) ermöglichen.

6. Abnehmbare Brühbaugruppe für Kaffeemaschinen nach den Ansprüchen 1 und 3, **dadurch gekennzeichnet, daß** der drückende Kolben (5) an dem Einsatz (6) mit Hilfe von Mitteln angebracht ist, mit denen seine Stellung in Bezug auf die Halterung (2) reguliert werden kann, wodurch ein größeres oder kleineres Volumen in der Brühkammer (3) erzielt und folglich die Menge an erzeugtem Kaffee verändert werden kann, wobei diese Mittel vorzugsweise durch eine Reihe von Tellern oder Scheiben (11) gebildet sind, die in unterschiedlicher Dicke und Anzahl sowohl auf der Ober- als auch auf der Unterseite des Einsatzes angeordnet werden können, um unterschiedliche Einstellungen der Kaffeedosis zu erhalten.

7. Abnehmbare Brühbaugruppe für Kaffeemaschinen nach Anspruch 1, **dadurch gekennzeichnet, daß** die Halterung (2) gelenkig mit einer Verbindungsstange (16) verbunden ist, über die sowohl die Auslenk- als auch die Schwenkbewegung der Halterung (2) übertragen wird, um letztere so zu fixieren, daß sie entweder dem zum Beschicken der Brühkammer (3) vorgesehenen Kaffeefülltrichter (13) oder dem zum Pressen des Kaffees in der Brühkammer (3) vorgesehenen drückenden Kolben (5) zugewandt ist.

8. Abnehmbare Brühbaugruppe für Kaffeemaschinen nach den Ansprüchen 1 und 7, **dadurch gekennzeichnet, daß** die Halterung (2) ein Paar Stifte (18) aufweist, die in entsprechenden im Gehäuse der Brühbaugruppe oder des Moduls (1) selbst angeordneten Kanälen (19) und (20) geführt sind, wobei der Kanal (19) über seine gesamt Länge gerade ist, während der Kanal (20) einen geraden Abschnitt und einen gekrümmten Abschnitt (20) aufweist, um die anfängliche Auslenkbewegung nach unten und die Schwenkbewegung der Halterung (2) zu ermöglichen.

9. Abnehmbare Brühbaugruppe für Kaffeemaschinen nach den Ansprüchen 1, 7 und 8, **dadurch gekennzeichnet, daß** die Betätigung der Halterung (2) in ihrer nach oben / nach unten gerichteten Schwenk- und Auslenkbewegung über einen Kurbelarm (4) ausgeführt wird, der mittels eines Reduktionsgetriebemotors (30) oder, bei Entnahme des Moduls aus der Maschine, mittels eines manuell zu bedienenden Hebels (41) betätigbar ist, wobei an dem Kurbelarm (4) ein Paar Nocken (21) und (22) angebracht sind, die auf einer am Ende des unteren Kolbens (14) vorgesehenen Rolle (25) aufschlagen können, um zunächst die Absenkung des unteren Kolbens (14) in die Brühkammer (3) während der Auslenkbewegung der Halterung (2) in Richtung der Beschickungsstellung der Brühkammer (3) zu bewirken, und um zu erreichen, daß in der nach unten gerichteten Auslenkbewegung der Halterung (2) der Nocken (22) auf die Rolle (25) aufschlägt und die Absenkung des unteren Kolbens (14) abbremst, um den Ausstoß der Kaffeemasse (12) zu bewirken.

10. Abnehmbare Brühbaugruppe für Kaffeemaschinen nach den Ansprüchen 1, 7, 8 und 9, **dadurch gekennzeichnet, daß** die Bedienmittel und ihre Bewegungen so ausgelegt sind, daß in der Preßstellung, in der große Kräfte auf die verschiedenen Elemente einwirken, die Drehwelle (32) des Kurbelarms (4) und die Achse (23) der Verbindungsstange (16) mit der in Querrichtung verlaufenden Rolle (24) der Spindel (25) des unteren Kolbens (14) ausgerichtet sind, und zwar so, daß sowohl der Kurbelarm (4) und die Verbindungsstange (16) als auch der untere Kolben (14) zum Zeitpunkt des Pressens in Kompression mit dem drückenden Kolben (5) zusammenwirken, so daß sie sich in einem feststehenden Zustand befinden, in dem die in dieser Betriebsphase auftretenden Druckkräfte vollständig aufgenommen werden können.

11. Abnehmbare Brühbaugruppe für Kaffeemaschinen nach Anspruch 1, **dadurch gekennzeichnet, daß** die bezüglich der antreibenden Reduktionsgetriebe-Motor-Baugruppe (30) wirkenden Schnellkupplungsmittel aus einer an der Abtriebswelle des Reduktionsgetriebemotors (30) der Maschine angebrachten Kupplungsscheibe (33) bestehen, die mit einem Nocken (34) gekoppelt ist, der die Welle (32) des Kurbelarms (4) der Brühbaugruppe antreibt, wobei vorgesehen ist, daß der Nocken (34) auf die Außenseite des Moduls (1) austritt und mit einer durch eine Feder gehaltenen Klinke (35) versehen ist, so daß beim Ankoppeln der Brühbaugruppe (1) an die Maschine der Nocken (34) der Kupplungsscheibe (33) zugewandt ist, wobei ersterer fixiert bleibt, während sich die Kupplungsscheibe (33) bis zu einem Punkt dreht, an dem eine am Umfang der Scheibe (33) vorgesehene Radialnut (36) die Position der Klinke (35) des Nockens (34) erreicht, die durch die Wirkung der Feder in der erwähnten Nut (36) positioniert wird, wodurch der Eingriff zwischen der Scheibe (33) und dem Nocken (34) erzeugt wird, der sich, gezogen durch die Kupplungsscheibe (33), zu drehen beginnt, wobei diese Bewegung wiederum auf die Welle (32) übertragen wird, die den Kurbelarm (4) der Brühbaugruppe betätigt.

12. Abnehmbare Brühbaugruppe für Kaffeemaschinen nach den Ansprüchen 1 und 11, **dadurch gekennzeichnet, daß** der Nocken (34) der Brühbaugruppe (1) außerdem ein unregelmäßiges Außenprofil (37) besitzt, das bei seiner durch die Kupplungsscheibe (33) angetriebenen Drehung so vor einem Mikrosensor (38) vorbeigeführt wird, daß das Außenprofil (37) des Nockens (34) die verschiedenen Phasen oder Abläufe der Drehung des Kurbelarms (4) in Übereinstimmung mit den verschiedenen Betriebsphasen der Maschine definiert.

13. Abnehmbare Brühbaugruppe für Kaffeemaschinen nach Anspruch 1, **dadurch gekennzeichnet, daß** die Schnellkupplungsmittel zu dem Wasserzulaufrohr (28) aus einem inneren Kupplungsstück (27) bestehen, das zu einem in der Maschine vorgesehenen äußeren Kupplungsstück (29) paßt, wobei das äußere Kupplungsstück (29) an einem Träger (42) angebracht ist, der zu einer geringfügigen, quer verlaufenden Auslenkbewegung fähig ist, damit kleine Unstimmigkeiten oder Fehlausrichtungen zwischen den beiden Kupplungsstücken (27) und (29) aufgenommen werden können, um so die Steckverbindung des Brühmoduls zu ermöglichen.

14. Abnehmbare Brühbaugruppe für Kaffeemaschinen nach Anspruch 1, **dadurch gekennzeichnet, daß** der Fülltrichter (13) für den gemahlenen Kaffee in Bezug auf die eigentliche Brühbaugruppe oder das eigentliche Brühmodul (1) abmontiert werden kann, wobei hierfür vorgesehen ist, daß der Fülltrichter in seinem unteren Kupplungsansatz ein Paar Beine (43) aufweist, die dazu bestimmt sind, in mehrere zu diesem Zweck im Gehäuse des Moduls (1) vorgesehene Nuten einzutreten, die jeweils mit Fugen versehen sind, die das Einsetzen oder Herausnehmen des erwähnten Trichters (13) ermöglichen, dessen Befestigung einfach dadurch erreicht wird, daß er so gedreht wird, daß die erwähnten Beine (43) in die erwähnte Nut eingeführt werden und auf diese Weise das Herausnehmen des Trichters verhindern, während es zum Herausziehen des Trichters (13) in Bezug auf die Brühbaugruppe genügt, den Trichter (13) so weit zu drehen, daß sich die Position der Beine (43) mit der Position der im Gehäuse vorgesehenen Fugen deckt.

## Revendications

1. Ensemble de préparation retirable pour des machines à café, qui est applicable dans des machines pour la préparation de café, dans lesquelles l'ensemble de préparation est extractible par rapport au corps de la machine, et comprend un support (2) dans lequel la chambre d'échaudage correspondante (3) du café est établie, le café venant d'une goulotte d'amenée (13), ainsi qu'un piston supérieur (5) pour presser le café à l'intérieur de la chambre d'échaudage (3), contre un piston inférieur (14) établi dans le fond de ladite chambre (3), ledit piston inférieur (14) agissant également comme un élément pour l'expulsion de la tablette de café formée à la suite de l'échaudage, l'ensemble de préparation comprenant également une raclette (26) pour le retrait de la tablette de café après que celle-ci a été expulsée de la chambre d'échaudage (3), incluant également une entrée d'eau (15) à la chambre (3) venant d'un socle de la machine, et une sortie (7) du café préparé, **caractérisé en ce que** tous les composants de l'ensemble de préparation sont intégrés dans un module (1), ledit module pouvant être divisé en deux parties ou unités, l'une étant constituée par le piston de compression (5), le tube de sortie (7) et le support (31), qui est relié au corps actuel de la machine, tandis que l'autre unité contient le support (2), le piston inférieur (14), la goulotte d'amenée de café (13), la raclette (26) et les cinématiques correspondantes, cette autre unité pouvant être fixée au support (31) et au corps actuel de la machine au moyen d'un système de couplage et de découplage à action rapide de telle manière que l'unité peut être retirée pour procéder au nettoyage de l'ensemble de préparation, l'unité constituée par le piston de compression (5), le tube de sortie (7) et le support (31) pouvant être extraite ensuite, le module (1) incorporant un moyen de couplage à action rapide par rapport à l'ensemble moteur menant à engrenage réducteur (30), ainsi qu'un moyen de couplage à action rapide au socle d'amenée d'eau (28) de la machine.

2. Ensemble de préparation extractible pour des machines à café selon la revendication 1, **caractérisé en ce que** les moyens de couplage et de découplage à action rapide du module (1) sont reliés à quelques commandes externes (39) dont le fonctionnement produit la rotation d'axes individuels (10), l'un d'eux se situant dans la partie supérieure du module (1) pour permettre la mise en et hors prise entre les deux parties ou unités constituant le module, tandis qu'au moins une autre commande (39) se situe dans la partie inférieure du module pour permettre la mise en ou hors prise entre le module (1) et la machine elle-même.

3. Ensemble de préparation extractible pour des machines à café selon la revendication 1, **caractérisé en ce que** le support (31) comprend un rebord par lequel il est fixé à la machine, ainsi qu'une saillie horizontale, par la voie d'un couvercle, équipé d'un trou central à travers lequel le boîtier (6) est installé qui supporte le piston de compression (5), la saillie horizontale mentionnée avant présentant, sur son bord latéral, un trou (40) pour la fixation d'un des axes (10) du module de préparation (1).

4. Ensemble de préparation extractible pour des machines à café selon les revendications 1 et 3, **caractérisé en ce que** le piston de compression (5) est monté sur le boîtier (6) par des moyens qui permettent au piston d'être indépendant par rapport au boîtier (6), ces moyens étant de préférence réalisés par un ressort en forme de fourchette ou une attache (9) pour permettre que tout type de bouchage, remplacement, réparation ou nettoyage du piston (5) puisse être résolu d'une manière rapide et simple.

5. Ensemble de préparation extractible pour des machines à café selon les revendications 1 et 3, **caractérisé en ce que** le boîtier (6) du piston de compression (5) incorpore également le tube de sortie correspondant (7) du café préparé, ayant ..des moyens qui facilitent le démontage dudit tube de sortie (7) par rapport au boîtier (6).

6. Ensemble de préparation extractible pour des machines à café selon les revendications 1 et 3, **caractérisé en ce que** le piston de compression (5) est monté sur le boîtier (6), par l'intermédiaire de moyens qui permettent que sa position soit réglée par rapport au support (2) en réalisant ainsi un volume plus grand ou plus petit dans la chambre d'échaudage (3) et en modifiant par conséquent la quantité de café produite, ces moyens étant constitués de préférence par une série de disques ou de rondelles (11) qui peuvent être agencées à la fois sur la face supérieure et inférieure du boîtier et en une épaisseur et nombre variable pour pouvoir obtenir des réglages multiples des doses de café.

7. Ensemble de préparation extractible pour des machines à café selon la revendication 1, **caractérisé en ce que** le support (2) est lié d'une manière articulée à une tige de connexion (16) par laquelle est transmis le mouvement à la fois du déplacement et du pivotement dudit support (2) pour le localiser en face de la goulotte d'amenée de café (13) pour le chargement de la chambre d'échaudage (3), ou pour faire face au piston de compression (5) pour la compression du café à l'intérieur d'une telle chambre d'échaudage (3), respectivement.

8. Ensemble de préparation extractible pour des machines à café selon les revendications 1 et 7, **caractérisé en ce que** le support (2) présente deux axes (18) qui sont guidés dans des canaux respectifs (19 et 20) établis dans le corps de l'ensemble de préparation ou le module (1) lui-même, le canal (19) étant rectiligne sur toute sa longueur, alors que le canal (20) présente une section droite et une section courbée (20') pour permettre le déplacement initial vers le bas du support (2) ainsi que son pivotement.

9. Ensemble de préparation extractible pour des machines à café selon les revendications 1, 7 et 8, **caractérisé en ce que** le fonctionnement du support (2) dans ses mouvements de déplacement pivotants vers le haut/vers le bas est exécuté par un bras de manivelle (4) actionnable par un moteur à engrenage réducteur (30) ou bien, lorsque le module est retiré de la machine, au moyen d'un levier actionné manuellement (41), sur ledit bras de manivelle (4) étant montée une paire de cames (21 et 22) apte à heurter un rouleau (25) prévu à l'extrémité du piston inférieur (14) pour produire, dans le premier cas, la descente du piston inférieur (14) à l'intérieur de la chambre d'échaudage (3) pendant le déplacement du support (2) vers la position de chargement de la chambre d'échaudage (3), et pour atteindre que lors du déplacement vers le bas du support (2), la came (22) heurte le rouleau (25) et empêche la descente du piston inférieur (14) pour produire l'expulsion de la tablette de café (12).

10. Ensemble de préparation extractible pour des machines à café selon les revendications 1, 7, 8 et 9, **caractérisé en ce que** les moyens de fonctionnement et les mouvements de celui-ci sont conçus de façon qu'en position de compression, où de grandes forces sont produites sur les différents éléments, l'arbre de rotation (32) du bras de manivelle (4) et l'axe (23) de la tige de connexion (16) sont alignés avec le rouleau transversal (24) de la broche (25) du piston inférieur (14) de telle manière qu'à la fois le bras de manivelle (4) et la tige de connexion (16) et le piston inférieur (14) fonctionnent en compression avec le piston de compression (5) au moment de la pression et de ce fait, ils sont dans un état stationnaire qui permet que les forces de compression qui se produisent pendant cette phase de fonctionnement soient parfaitement supportées.

11. Ensemble de préparation extractible pour des machines à café selon la revendication 1, **caractérisé en ce que** les moyens de couplage à action rapide par rapport à l'ensemble de moteur menant à engrenage réducteur (30) sont constitués d'une plaque d'embrayage (33) montée sur l'arbre de sortie du moteur à engrenage réducteur (30) de la machine, qui est couplé avec une came (34) qui agit sur l'arbre (32) du bras de manivelle (4) de l'ensemble de préparation, il est prévu que la came (34) émerge à l'extérieur du module (1) et présente un cliquet (35) retenu par un ressort de telle manière que lors du couplage de l'ensemble de préparation (1) à la machine, la came (34) est orientée vers la plaque d'embrayage (33), la première étant immobilisée pendant que la plaque d'embrayage (33) tourne jusqu'à un point où une rainure radiale (36) prévue sur la périphérie du disque (33) atteint la position du cliquet (35) de la came (34) qui, sous l'action du ressort, se situe dans la rainure précitée (36) en produisant la prise entre le disque (33) et la came (34) qui commence à tourner, tirée par la plaque d'embrayage (33), ce mouvement étant transmis à son tour à l'arbre (32) qui fait fonctionner le bras de manivelle (4) de l'ensemble de préparation.

12. Ensemble de préparation extractible pour des machines à café selon les revendications 1 et 11, **caractérisé en ce que** la came (34) de l'ensemble de préparation (1) présente également un profil irrégulier externe (37) qui, lors de sa rotation entraînée par la plaque d'embrayage (33), passe devant un microcapteur (38) de telle manière que le profil externe (37) de la came (34) définit des phases ou séquences de rotation différentes du bras de manivelle (4) en accord avec les différentes phases de fonctionnement de la machine.

13. Ensemble de préparation extractible pour des machines à café selon la revendication 1, **caractérisé en ce que** les moyens du couplage à action rapide avec le socle d'amenée d'eau (28) sont matérialisés par un organe de couplage mâle (27) qui est complémentaire à un organe de couplage femelle (29) prévu dans la machine, l'organe de couplage femelle (29) étant monté sur un support (42) apte à exécuter un léger déplacement transversal, dans le but de pouvoir absorber de petits défauts de correspondance ou d'alignement entre les deux organes de couplage (27 et 29) en facilitant de cette manière la connexion d'enfichage du module de préparation.

14. Ensemble de préparation extractible pour des machines à café selon la revendication 1, **caractérisé en ce que** la goulotte d'amenée de café moulu (13) peut être démontée par rapport à l'ensemble ou module de préparation actuel (1), et dans ce but il est prévu que son col de couplage inférieur présente une paire de branches (43) destinées à se loger dans des rainures ménagées à cette fin dans le corps du module (1), chacune de ces rainures ayant des diminutions qui permettent l'insertion ou le retrait de la goulotte mentionnée (13), sa fixation étant simplement obtenue en faisant tourner la goulotte de telle manière que les branches précitées (43) sont introduites dans la rainure précitée, en empêchant de cette manière le retrait de la goulotte, alors que pour extraire la goulotte (13) par rapport à l'ensemble de préparation, il suffit de faire tourner la goulotte (13) jusqu'à ce que les branches (43) coïncident avec la position des diminutions prévus dans le corps.
